# EUROPEAN PATENT APPLICATION

(11) **EP 4 521 520 A1**
(43) Date of publication of application: **12.03.2025**
(21) Application number: 24197636.4
(22) Date of filing: 30.08.2024
(51) Int. Cl.: H01M 50/103, H01M 50/117, H01M 50/131, H01M 50/342

(54) **BATTERY CELL AND MANUFACTURING METHOD OF THE SAME**

(30) Priority: 11.09.2023 KR 20230120339
(71) Applicant: SK On Co., Ltd., Seoul 03161 (KR)
(72) Inventor: CHEONG, Hoemin, 34124 Daejeon (KR); KWAK, Seung Ho, 34124 Daejeon (KR); JU, Seung Hoon, 34124 Daejeon (KR); PAK, Byeong Jun, 34124 Daejeon (KR); LEE, Dong Hyee, 34124 Daejeon (KR)
(74) Representative: Stolmár & Partner Patentanwälte PartG mbB

(57) **Abstract**

A battery cell of the present disclosure includes: an electrode assembly including a cathode, an anode, and a separator disposed between the cathode and the anode; and an exterior material accommodating the electrode assembly therein, wherein the exterior material includes: a first region including a notch portion provided on an outer surface; and a second region surrounding the first region, wherein the tensile strength of the first region is provided to be lower than the tensile strength of the second region.

## Description

### BACKGROUND OF THE INVENTION

### 1. Field

The present disclosure relates generally to a battery cell and a manufacturing method of the battery cell. Specifically, it relates to a battery cell having an exterior material with a variable tensile strength and a method of manufacturing the same.

### 2. Description of the Related Art

A secondary battery is a battery that converts electrical energy into chemical energy and stores it so that it may be reused multiple times through charging and discharging of the battery. Secondary batteries are widely used across industries due to their economical and eco-friendly characteristics. In particular, among secondary batteries, lithium secondary batteries are widely used throughout industries, including portable devices that require high-density energy.

The operating principle of lithium secondary batteries is an electrochemical oxidation-reduction reaction. In other words, the principle is that electricity is generated through the movement of lithium ions and charged in the reverse process. During charging lithium ions from the cathode move via the electrolyte to the anode and are stored in the anode active material via a process known as intercalation. During discharging the lithium ions move back to the cathode releasing electricity that may be used to power a device. A separator is disposed between the cathode and anode physically separating the two from each other but it allows the flow of lithium ions through its structure. The process of charging and discharging in a secondary battery may be repeated multiple times. However, as charging and discharging is repeated many times, a swelling phenomenon may occur in which an internal pressure is increased and a large amount of heat is generated. This swelling phenomenon may lead to explosion or fire. Hence, improved technologies for controlling the internal pressure of secondary batteries will be highly desirable.

### SUMMARY OF THE INVENTION

An object of the present disclosure is to provide a battery cell with improved internal pressure control, and stability, and a method of manufacturing the same.

Another object of the present disclosure is to provide a battery cell having an exterior material with a variable tensile strength and a method of manufacturing the same.

Yet another object of the present disclosure is to provide a manufacturing method of a battery cell in which a notch portion is manufactured as one body with an exterior material to exhibit improved production efficiency.
The battery cell according to the present disclosure may be widely applied in the field of green technology, such as electric vehicles, battery charging stations, solar power generation, and wind power generation using batteries. In addition, the battery cell according to the present disclosure may be used in eco-friendly electric vehicles, hybrid vehicles, etc. to prevent climate change by suppressing air pollution and greenhouse gas emissions.

In an embodiment, a battery cell according to the present disclosure includes: an electrode assembly including a cathode, an anode, and a separator disposed between the cathode and the anode; and an exterior material accommodating the electrode assembly therein, wherein the exterior material includes: a first region including a notch portion provided on an outer surface; and a second region surrounding the first region, wherein the tensile strength of the first region is provided to be lower than the tensile strength of the second region.

The notch portion may be provided in the form of a groove or indentation recessed from an outer surface of the exterior material toward the inside.

The tensile strength of the first region may be 80% or less of the tensile strength of the second region.

The elongation of the first region may be provided to be different from the elongation of the second region.

The elongation of the first region may be greater than the elongation of the second region.

The elongation of the first region may be 300% or more of the elongation of the second region.

The exterior material may further include: a body portion accommodating the electrode assembly; and a cap portion including a cell tab, which electrically connects the electrode assembly to the outside, and covering the body portion, wherein the notch portion is provided in the body portion.

The notch portion may be formed as one body with the exterior material.

The notch portion and the venting portion may be positioned to overlap along a recession direction in which the at least one surface is recessed.

The notch portion may include an identical material as the exterior material.

The exterior material may further include a venting portion formed by recession of at least one of an inner surface and an outer surface provided in a direction opposite to the inner surface, and the notch portion and the venting portion may be positioned to overlap along a recession direction in which the at least one surface is recessed.

The shape of the notch may be changed based on the internal pressure of the exterior material.

When the internal pressure of the exterior material increases, the notch portion may be opened.

The thickness of the notch portion along the direction in which the notch portion is recessed may be 40% or less of the thickness of the exterior material.

According to an embodiment a battery cell may comprise: an electrode assembly including a cathode, an anode, and a separator disposed between the cathode and the anode, the separator physically separating the cathode from the anode but allowing the flow of ions; and an exterior material including at least one region of reduced tensile strength than the remaining exterior material.

The at least one region of reduced tensile strength may form an indentation within the remaining exterior material. The at least one region of reduced tensile strength may be formed in a preset region of the exterior material via a laser heating the preset area. In an embodiment, the preset region may be a region of reduced thickness compared to the remaining of the exterior material.

In addition, a manufacturing method of a battery cell of the present disclosure includes: a heating operation of heating one region of an exterior material; and a notch operation of forming a notch portion in one region of the heated exterior material.

In the heating operation, the exterior material may be heated by irradiating a first laser.

The first laser may be a diode laser.

In the notch operation, the notch portion may be formed by irradiating a second laser having a pulse width different from the pulse width of the first laser.

The manufacturing method of a battery cell may further include a venting portion forming operation of forming a venting portion by pressurizing at least one of an inner surface of the exterior material and an outer surface of the exterior material.

The manufacturing method of a battery cell may further include: an inserting operation of inserting the electrode assembly into the body portion; and a covering operation of covering an opening portion provided in the body portion with the cap portion.

According to one embodiment of the present disclosure, a battery cell in which the internal pressure is controlled to exhibit improved stability may be provided.

In addition, a manufacturing method of a battery cell in which a notch portion is manufactured as one body with an exterior material to exhibit improved production efficiency may be provided.

### BRIEF DESCRIPTION OF THE DRAWINGS

FIGS. 1 and 2 show a battery cell according to an embodiment of the present disclosure.
FIG. 3 shows an example of a method of manufacturing an exterior material of the present disclosure.
FIGS. 4 and 5 show heating of an exterior material
FIG. 6 shows physical properties of a notch portion.
FIGS. 7 to 10 show various embodiments of a battery cell of the present disclosure.
FIGS. 11A to 11C show various embodiments of a notch portion of the present disclosure.
FIG. 12 shows the sequence of a manufacturing method of a battery cell according to one embodiment of the present disclosure.
FIGS. 13 and 14 show each operation of a manufacturing method of a battery cell according to one embodiment of the present disclosure.

### DETAILED DESCRIPTION

Hereinafter, the present disclosure will be described in detail with reference to the attached drawings. This is merely illustrative, and the present disclosure is not limited to the specific embodiments described in an illustrative manner.

Specific terms used in the present specification are merely for convenience of explanation and are not used to limit the illustrated embodiments.

For example, expressions such as "same" and "is the same" not only indicate a strictly identical state, but also indicate a state in which there is a difference in tolerance or the degree to which the same function is obtained.

For example, expressions representing relative or absolute arrangement such as "in a certain direction," "along a certain direction," "side by side," "perpendicularly," "at the center," "concentric," or "coaxial," not only strictly represent the arrangement, but also represent the state of relative displacement with a tolerance, or an angle or distance at which the same function is obtained.

To explain the present disclosure, it will be described below based on a spatial orthogonal coordinate system with X, Y, and Z axes orthogonal to each other. Each axis direction (X-axis direction, Y-axis direction, Z-axis direction) refers to both directions in which each axis extends.

The X-direction, Y-direction, and Z-direction mentioned below are for explanation so that the present disclosure may be clearly understood, and of course, the directions may be defined differently depending on where the reference is placed.

The use of terms such as 'first, second, and third' in front of the components mentioned below is only to avoid confusion about the components to which they are referred and is irrelevant to the order, importance, or master-slave relationship between the components, etc. For example, an invention that includes only a second component without a first component may also be implemented.

As used in this specification, singular expressions include plural expressions unless the context clearly dictates otherwise.

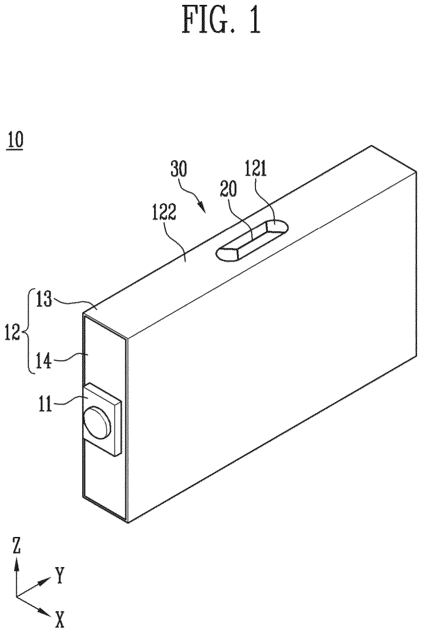

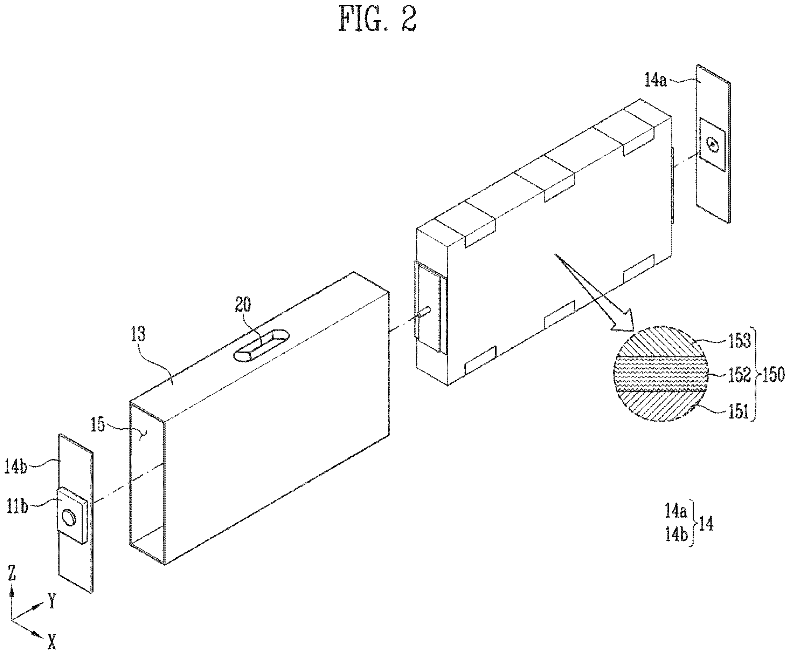

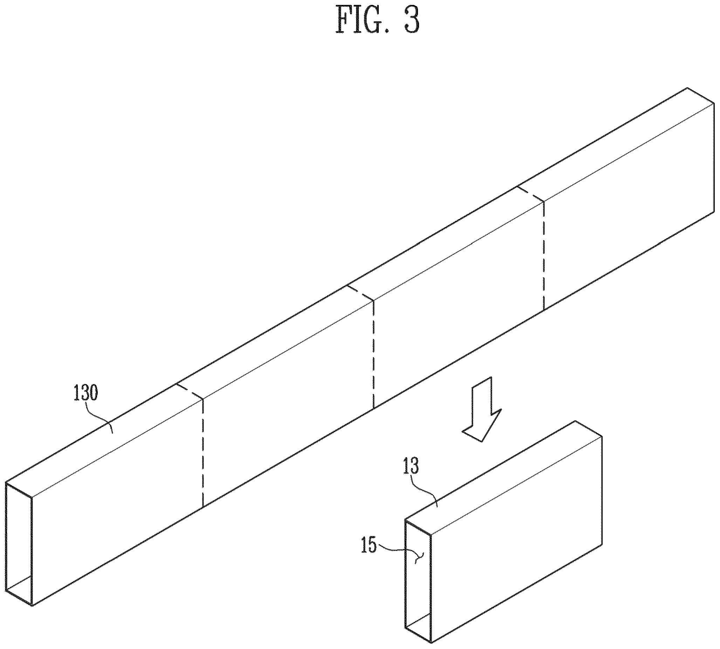

FIGS. 1 and 2 show a battery cell 10 according to an embodiment of the present disclosure; and FIG. 3 shows an example of a method of manufacturing an exterior material of the present disclosure.

The battery cell 10 described in the present specification refers to a secondary battery that may be repeatedly used by charging and discharging electrical energy. For example, a battery cell may be a lithium secondary battery, but it is not limited thereto.

Battery cells 10 may be classified into a pouch-type secondary battery, a prismatic secondary battery, or a cylindrical secondary battery depending on the shape. Referring to FIG. 1, in the present specification, a prismatic secondary battery is shown as an example for convenience of explanation, but the present disclosure is not limited thereto.

The battery cell 10 of the present disclosure includes an electrode assembly 150 including a cathode, an anode, and a separator disposed between the cathode and the anode. The battery cell 10 may further comprise the exterior material 12 accommodating the electrode assembly 150 therein. The exterior material may include the first region 121 including notch portion 20 provided on an outer surface, and the second region 122 surrounding the first region. The tensile strength of the first region 121 is lower than the tensile strength of the second region 122.

The battery cell 10 includes an electrode assembly 150. Referring to FIG. 2, an electrode assembly 150 may include a cathode 151, an anode 153, and a separator 152 disposed between the cathode and the anode physically separating the cathode and anode but allowing ions to pass through its structure. An electrode assembly 150 may be classified into a stacking type, a winding type, a stack-folding type, and a Z-stacking type depending on the method by which a cathode 151, an anode 153, and a separator 152 are stacked.

The type of an electrode assembly 150 included in the battery cell 10 of the present disclosure is not limited. In other words, an electrode assembly 150 included in the battery cell of the present disclosure may be an electrode assembly 150 manufactured in any one method of a stacking type, a winding type, a stack-folding type, and a Z-stacking type.

A cathode 151 and an anode 153 may include a current collector. A cathode 151 may include a cathode current collector, and an anode 153 may include an anode current collector. A current collector may include a known conductive material to an extent that it does not cause a chemical reaction within a lithium secondary battery. For example, a current collector may include any one of stainless steel, nickel (Ni), aluminum (Al), titanium (Ti), copper (Cu), and alloys thereof, and may be provided in various forms such as a film, a sheet, a foil, and the like.

A cathode 151 and an anode 153 may include an active material. A cathode 151 may include a cathode active material, and an anode 153 may include an anode active material. A cathode active material may be a material which lithium (Li) ions may be inserted into and extracted from, and an anode active material may be a material which lithium ions may be adsorbed into and extracted from. For example, a cathode active material may be lithium metal oxide, and an anode active material may be any one of a carbon-based material such as crystalline carbon, amorphous carbon, carbon composite, and carbon fiber, a lithium alloy, silicon (Si), and tin (Sn).

In addition, a cathode 151 and an anode 153 may further include a binder and a conductive material to improve mechanical stability and electrical conductivity, respectively.

A separator 152 may be configured to prevent an electrical short circuit between a cathode 151 and an anode 153 and to allow a flow of ions through its structure. The type of a separator is not particularly limited, but may include a porous polymer film. For example, a separator may include a porous polymer film or a porous nonwoven fabric.

An electrolyte may include an electrolyte solution. An electrolyte solution may be a nonaqueous electrolyte solution. An electrolyte solution may include a lithium salt and an organic solvent. An electrolyte solution may further include an additive. An additive may form a film on a cathode or an anode through a chemical reaction inside a battery. For example, a cathode interface film may be formed on a cathode, and an anode interface film may be formed on an anode.

Referring to FIG. 2, the exterior material 12 may accommodate an electrode assembly 150 (FIG.2) therein. The exterior material 12 may accommodate the electrode assembly and an electrolyte solution therein. The exterior material 12 may be provided with an external insulating layer made of a polymer material, an internal adhesive layer, and a metal layer interposed between an external insulating layer and an internal adhesive layer. The exterior material 12 may include a material with high mechanical rigidity for protecting the battery cell 10 from an external shock. For example, the exterior material 12 may include an aluminum layer.

In one embodiment, an exterior material may be manufactured using extrusion. Referring to FIG. 3, one region of an exterior material body 130 may be extruded to form an empty space in the internal region. Afterwards, the exterior material body 130 may be cut in a preset interval to manufacture a plurality of exterior materials 12.

In another embodiment, an exterior material may be manufactured through a press process. As long as an exterior material may protect a battery cell from external shock, a method of manufacturing an exterior material is not particularly limited.

The exterior material 12 may include a body portion 13 accommodating the electrode assembly, and a cap portion 14 covering the body portion 13. The cap portion 14 may include a cell tab 11 electrically connecting an electrode assembly to the outside.

Referring to FIG. 2, the body portion 13 may include an open opening portion 15. The body portion 13 may be open on both surfaces. In the body portion 13, both opposing surfaces may each be open. Referring to FIG. 2, both surfaces of the body portion 13 may be open toward the Y-direction. An electrode assembly and an electrolyte may be accommodated inside the exterior material 12 through the opening portion 15. For example, the opening portion 15 may be provided in a hexahedral shape so that both surfaces may be open along the Y-direction. The cap portion 14 may cover both open surfaces of the body portion 13. The body portion 13 and the cap portion 14 may be combined to close an accommodation space of the exterior material 12.

Cap portions 14a, 14b may cover the body portion 13. In other words, cap portions 14a, 14b may cover both open surfaces of the body portion 13 to protect components accommodated in the body portion 13. The body portion 13 and the cap portions 14a, 14b may be coupled and sealed with each other.

The battery cell 10 may further include cell tab 11 protruding toward the outside of the exterior material 12 for electrical connection to the outside. The cell tab 11 may be provided in a cap portion 14. Battery cell 10 may include a plurality of cap portions 14a, 14b and a plurality of cell tabs 11a, 11b. Each cell tab 11a, 11b may be provided on the plurality of cap portions 14a, 14b.

Cell tabs 11 (11a, 11b) may each be connected to a cathode and an anode of battery cell 10. Cell tab 11 may include cathode tab 11a connected to a cathode and anode tab 11b connected to an anode.

Referring to FIGS. 1 and 2, battery cell 10 may include notch portion 20 provided on a surface of the exterior material 12. Notch portion 20 may be provided on an outer surface of the exterior material 12. Notch portion 20 may be provided in the form of a groove or indentation from an outer surface toward the inside of the exterior material 12. In other words, notch portion 20 may be provided in the form of a groove or indentation recessed from an outer surface toward the inside of the exterior material 12.

Battery cell 10 of the present disclosure may adjust the internal pressure through the notch portion 20. Battery cell 10 may be used multiple times by repeatedly charging and discharging. The internal pressure of battery cell 10 may increase due to a gas generated in this process. When a gas is continuously left without being discharging, battery cell 10 has a risk of explosion. Therefore, in order to use the battery cell 10 safely, it is necessary to properly adjust the pressure of the battery cell 10.

Notch portion 20 may be provided on one side of exterior material 12 so that a gas may be discharged through the notch portion 20. In other words, the shape of the notch portion 20 may be changed based on the internal pressure of the exterior material 12 and, when the internal pressure of the exterior material 12 increases and reaches a fracture pressure, the notch portion 20 may be opened. When the internal pressure of the exterior material 12 is lower than the fracture pressure, the shape of the notch portion 20 may be maintained. When the internal pressure of the exterior material 12 increases above a fracture pressure through continuous use of a battery cell, the shape of notch portion 20 may change and, more, specifically, the notch portion 20 may be opened so that gas from the inside of the exterior material 12 may be discharged to the outside, thereby causing the internal pressure to decrease.

In the illustrated embodiment, a single notch portion 20 is shown. However, the invention is not limited in this way. Hence, in an embodiment, more than one notch portion 20 may be provided. Having more than one notch portions 20 may allow the pressure of the battery cell 10 to be quickly decreased to prevent explosion of the battery cell 10. The notch portion 20 may be provided in the body portion 13. The notch portion 20 may be formed as one body within the body portion 13. For example, the notch portion 20 may be formed through laser processing in a preset region of the body portion 13, rather than being manufactured separately and then joined to the body portion 13.

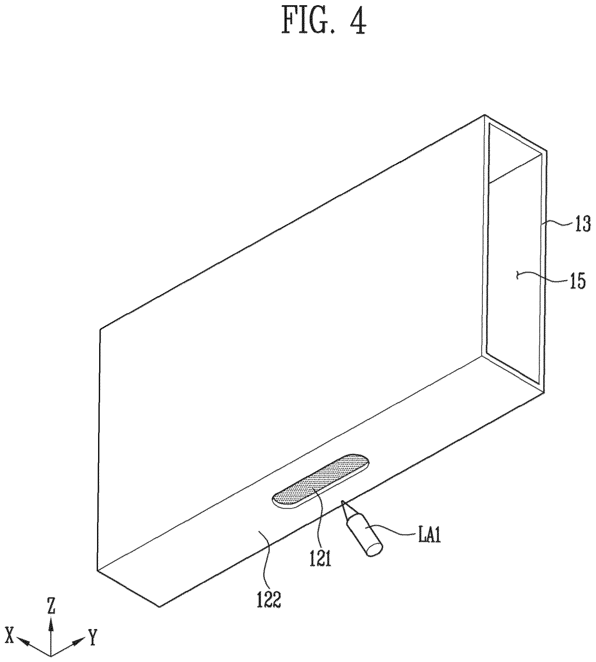

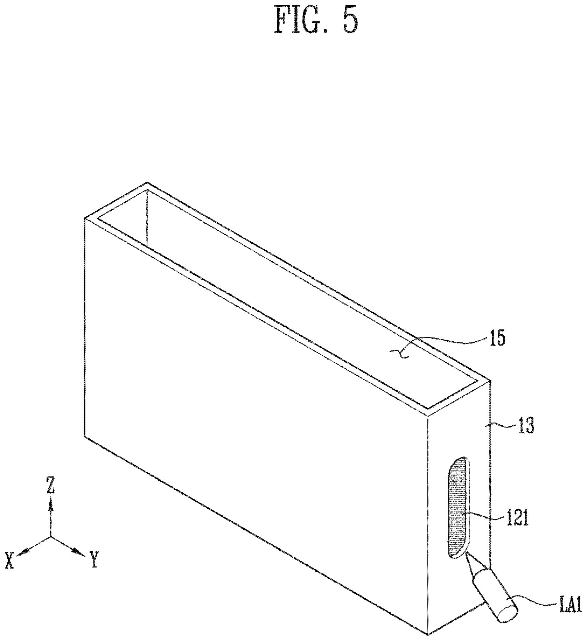

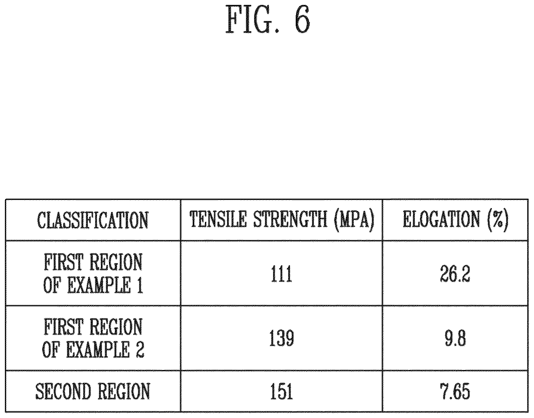

FIGS. 4 and 5 show heating of an exterior material to form notch portion and FIG. 6 shows physical properties of the formed notch portion.

Referring to FIG. 4, an exterior material 12 may include a first region 121 including the notch portion; and a second region 122 surrounding the first region. The notch portion may be provided in the first region 121. In other words, the notch portion may be formed in a preset first region of the exterior material.

The second region may refer to a region of an exterior material that is not a first region. A second region may be positioned on the same surface as a first region of an exterior material where a notch portion is formed. In other words, a first region and a second region may form one surface of the exterior material. The first region 121 may include a notch portion, and the second region 122 may refer to a region that does not include a notch portion.

The first and second regions 121, 122 of the battery cell 10 may have different physical properties. To this end, the first region 121 may be heated. The first region 121 of the exterior material 12 may be heated to change the physical properties of the first region 121. For example, the first region 121 may be heated to a temperature of 200 °C or higher in less than 5 seconds.

The heating of the first region 121 may be performed using a laser. However, the method of heating the first region 121 is not limited. When a laser is used, an outer surface of the exterior material may be heated without a difficulty. Through this, a user can precisely heat a desired position and improve manufacturing efficiency. Referring to FIGS. 4 and 5, one surface of the exterior material 12 may be heated using a laser. The preset first region 121 on the outer surface of the exterior material 12 may be heated using the laser LA 1.

For example, referring to FIG. 4, an outer surface of a bidirectional battery cell 10, in which both surfaces of the body portion 13 are open, may be heated by a laser. In another embodiment, referring to FIG. 5, the outer surface of the unidirectional battery cell 10, in which one surface is open, may be heated by the laser. One surface of an exterior material may be easily heated using the laser.

A fiber laser or a diode laser may be used as a laser.

The laser may have a wavelength in a range from 780 nm to 2200 nm. The laser may be used as a fiber laser. A fiber laser has high peak power and, thus, is capable of cutting or processing a base material. In addition, a fiber laser has a small beam size and thus has a high energy density and is capable of intensively delivering energy to a narrow region.

A diode laser having a wavelength in the range from 810 nm to 1064 nm may also be used. A diode laser has lower peak power than a fiber laser, but it is capable of delivering energy while minimizing damage to a base material. Therefore, a diode laser may be used to heat a base material. In addition, the beam size is larger than that of a fiber laser, allowing energy to be delivered evenly over a wide region.

Referring to FIG. 6, in the first region of Example 1, the exterior material was heated using a diode laser, and in the first region of Example 2, the exterior material was heated using a fiber laser.

Through heating, the tensile strength of the exterior material 12 may be changed. The tensile strength of the first region 121 and the tensile strength of the second region 122 may be different. The tensile strength of the first region 121 may be provided to be lower than the tensile strength of the second region 122. In other words, the first region 121 of the exterior material 12, which includes the notch portion, may be broken by a lower pressure force than the second region 122, which does not include the notch portion.

The tensile strength of the exterior material may be measured using the ASTM D638 method or the ISO 527 method. For measurement, a specimen of the exterior material that has not been heat-treated, that is, the second region of the exterior material is prepared. For comparison, a specimen of a heated exterior material is prepared. For example, a specimen heated with a diode laser (Example 1) and a specimen heated with a fiber laser (Example 2) are prepared. Each specimen may be cut into Type 4 or Type 5 to measure the tensile strength.

The tensile strength of the first region 121 may be provided to be 80% or less of the tensile strength of the second region 122. Referring to FIG. 6, the tensile strength of the second region 122 may be 151 MPa, and the tensile strength of the first region 121 of Example 1 may be 111 MPa. The tensile strength of the first region 121 may be provided to be 80% or less of the tensile strength of the second region 122.

As the tensile strength of the first region 121 is provided to be 80% or less of the tensile strength of the second region 122, even when the fracture pressure is reached, the risk of the second region 122 to be fractured may be reduced, and only the first region 121 may be fractured.

When the internal pressure of a battery cell increases and reaches a fracture pressure, a notch portion included in the first region 121 may be opened. A fracture pressure may be equal to the tensile strength of the first region 121. Since the tensile strength of the second region 122 is higher than the fracture pressure, the shape of the second region 122 may be maintained.

The elongation of an exterior material may be changed through heating. The elongation of the first region 121 may be provided to be different from the elongation of the second region 122. The elongation of the first region 121 may be greater than the elongation of the second region 122. In other words, the first region 121 may be elongated more than the second region 122. Here, the elongation may refer to the elongation at the yield point.

As described above, the elongation of an exterior material may be measured using the ASTM D638 method or the ISO 527 method.

The elongation of the first region 121 may be 300% or more of the elongation of the second region 122. Referring to FIG. 6, the elongation of the first region 121 of Example 1 may be 26.2, and the elongation of the second region 122 may be 7.65.

As the elongation of the first region 121 is provided to be 300% or more of the elongation of the second region 122, when the pressure increases, the first region 121 may be elongated, and the change of the shape of the second region 122 may be little.

In an embodiment, the first region 121 may have lower tensile strength and higher elongation than the second region 122. In other words, when the pressure of a battery cell increases, the first region 121 is elongated, and when the pressure of the battery cell reaches a fracture pressure, a notch portion provided in the first region 121 may be fractured first to be opened. Through this, the internal pressure may be adjusted while maintaining the shape of a battery cell.

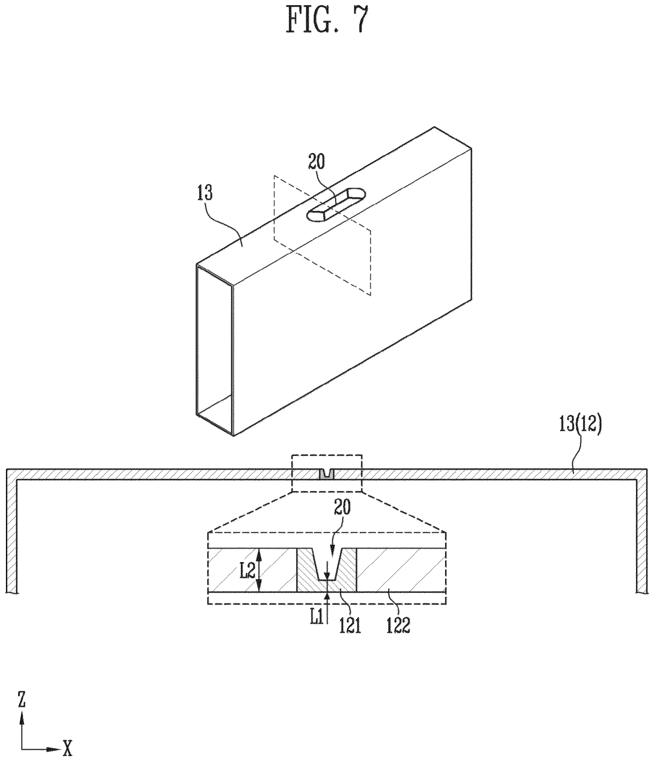

FIGS. 7 to 10 show various embodiments of a battery cell of the present disclosure.

Referring to FIG. 7, notch portion 20 may be formed by being recessed from an outer surface of the exterior material 12 toward the inside. At least a part of notch portion 20 may be formed to extend along one direction from an inner surface. Through this, both surfaces of notch portion 20 will be spaced apart so that a gas inside may be easily discharged.

The depth in which notch portion 20 is recessed may be 60% or more of the thickness of the exterior material 12. In other words, referring to FIG. 7, the thickness L1 of the exterior material 12 in which notch portion 20 is formed may be 40% or less of the thickness L2 of the exterior material 12 on which notch portion 20 is not formed.

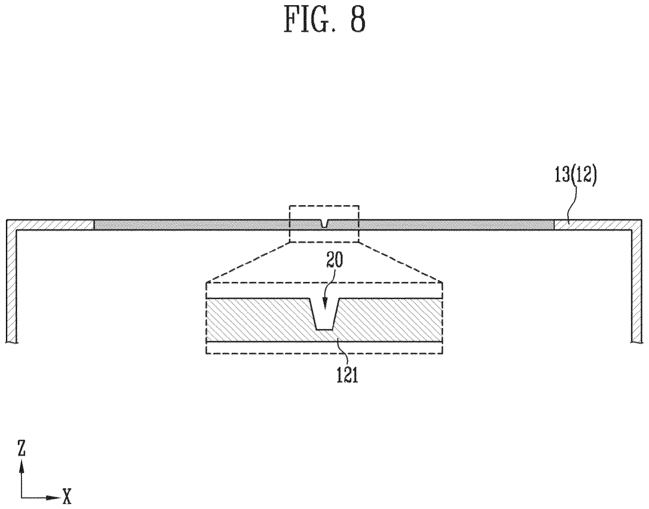

A first region is not limited to a particular region, as long as it may include a notch portion. Referring to FIG. 8, a first region may extend along the X-direction from one surface of a body portion provided with a notch portion.

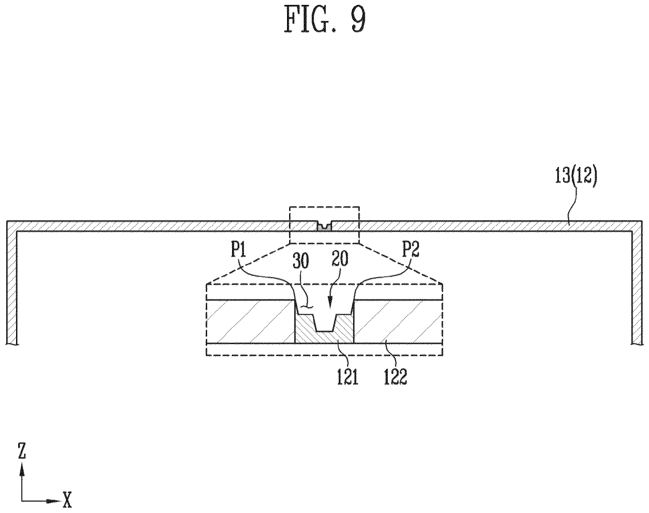

Referring to FIG. 9, a battery cell of the present disclosure may further include a venting portion 30. Venting portion 30 may be formed by recession of as at least one surface of an inner surface of the exterior material 12 and an outer surface provided in a direction opposite to the inner surface. A first region may include a venting portion. In other words, a venting portion may be formed in a preset first region.

A notch portion and a venting portion may be positioned to overlap along a recession direction in which the venting portion is recessed. In other words, notch portion 20 may be positioned in the venting portion 30. The venting portion 30 is intended to make the thickness of the exterior material 12 thinner. Through this, when the internal pressure of battery cell 10 increases, notch portion 20 may be easily opened.

Due to the notch portion 20 and the venting portion 30, the thickness of the exterior material 12 may be formed to be thinner in the preset first region 121 than in the remaining second region 122. Through this, when the internal pressure of the battery cell 10 increases and reaches the fracture pressure, the notch portion 20 may be opened to release the pressure and prevent explosion of the battery cell 10.

The venting portion 30 may be formed as one body with the exterior material 12. As described above, like the notch portion 20, the venting portion 30 may not be manufactured separately but may be formed as one body with the exterior material 12. For example, the venting portion 30 may be formed through mechanical cutting or laser etching.

Referring to FIG. 9 again, the width of the first region 121 and the width of the venting portion 30 may be provided to be the same. Referring to FIG. 9, the width of the venting portion 30 may be defined as a distance from a recession start point P1 of the venting portion to a recession end point P2 of the venting portion along the X-direction. A region between recession start point P1 and recession end point P2 may be heated so that the venting portion 30 may be positioned to overlap with the first region 121.

Through this, the possibility of the notch portion 20 to be fractured earlier than the other regions of the battery cell may be improved. In other words, as the first region 121 is heated to change its physical properties and reduce its thickness to be thinner than the rest of the exterior material 12, when the internal pressure increases, the notch portion 20 may be opened at first.

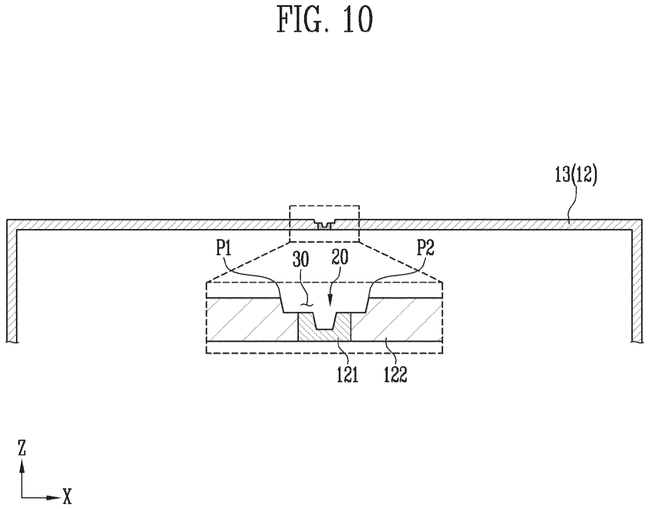

In another embodiment, the width of the venting portion 30a may be provided to be longer than the width of the first region 121. Referring to FIG. 10, only a part from a recession start point P1, at which the exterior material 12 starts to be recessed, to a recession end point P2 may be heated. Through this, when the pressure increases, a notch portion may be opened at first.

Notch portion 20 may be made of an identical material as the exterior material 12. For example, the notch portion 20 may be made to include an internal adhesive layer, an external insulating layer, and a metal layer. Through this, the notch portion 20 may perform the same function as the exterior material 12. For example, the notch portion 20 may protect an electrode assembly from external shock.

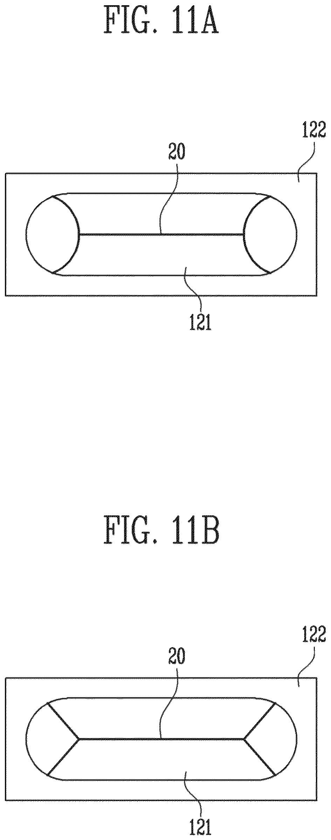

FIGS. 11A to 11C show various embodiments of the notch portion of the present disclosure.

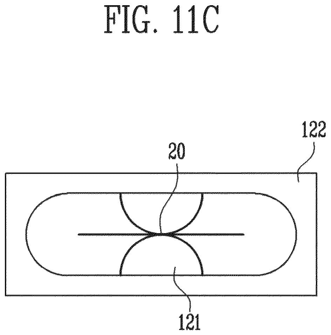

Notch portion 20 may be provided in various shapes. Referring to FIG. 11A, notch portion 20 may be provided as a line in which a central region extends in one direction and one end and the other end have a curvature. Referring to FIG. 11B, notch portion 20 may be provided to have a central region extending in one direction and one end and the other end being a straight line. Referring to FIG. 11C, notch portion 20 may have a central region extending in one direction and may further include a line having the shape of an arc. The shape of notch portion 20 is not limited as long as it may be opened on an outer surface of an exterior material.

Hereinafter, a manufacturing method of the battery cell 10 according to the present disclosure will be described in detail.

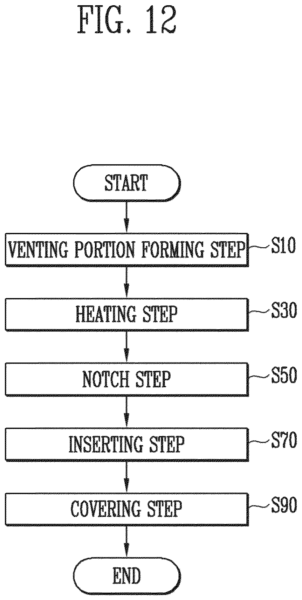

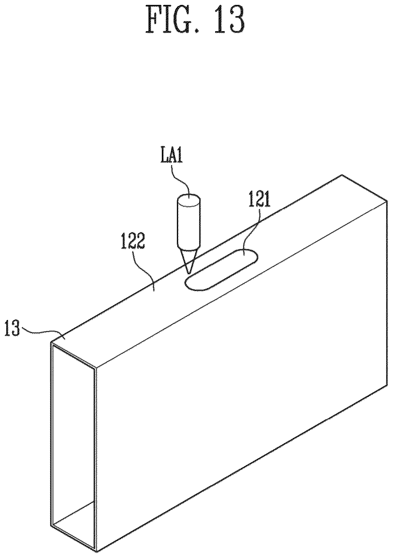

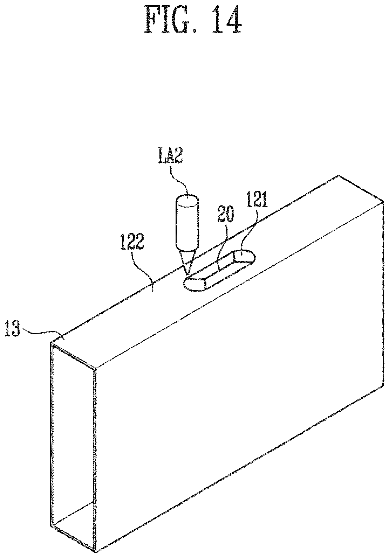

FIG. 12 shows the sequence of a manufacturing method of a battery cell according to an embodiment of the present disclosure, and FIGS. 13 and 14 show each operation of a manufacturing method of a battery cell according to one embodiment of the present disclosure.

Referring to FIG. 12, a manufacturing method of a battery cell according to the present disclosure includes: a heating operation S30 of heating one region of an exterior material; and a notch operation S50 of forming a notch portion in one region of the heated exterior material.

Referring to FIG. 13, in the manufacturing method of the present disclosure, the first region 121 may be formed by heating one region of an exterior material through a heating operation S30 of heating one region of an exterior material. In the heating operation S30 of heating one region of the exterior material, the physical properties of the exterior material may be changed. In an embodiment, in the heating operation S30 of heating one region of the exterior material, the first region 121 whose physical properties are changed by heating the exterior material and the second region 122 surrounding the first region 121 may by formed. The first region 121 and the second region 122 are not formed by separate welding or the like, but may be formed as one body.

In the heating operation S30 of heating one region of the exterior material, the exterior material may be heated by irradiating a first laser LA1. The type of laser is not particularly limited as long as it can heat the exterior material. For example, the first laser may be a diode laser.

Referring to FIG. 14, in the notch operation S50 of forming the notch portion in one region of the heated exterior material, the notch portion 20 may be formed by irradiating the laser to a preset region of the exterior material 12. Notch portion 20 may be formed by irradiating the laser to one region of a body portion 13 and the cap portion 14. The preset region may be the first region 121 (see FIG. 13).

In the notch operation S50 of forming the notch portion, notch portion 20 may be formed by irradiating the laser to the region of the exterior material heated by the heating operation S30 of heating one region of the exterior material. Notch portion 20 may be formed at an exact position using the laser, and since the work process is simple, manufacturing efficiency may be improved.

In the notch operation S50 of forming the notch portion, the notch portion 20 may be formed by irradiating second laser LA2. In other words, the pulse width of the second laser used in the notch operation S50 of forming the notch portion may be different from the pulse width of the first laser used in the heating operation. The pulse width of the second laser used in the notch operation S50 of forming the notch portion may be shorter than the pulse width of the first laser used in the heating operation S30 of heating one region of the exterior material.

Since the shorter the pulse width, the higher the peak power, the second laser used in the notch operation S50 of forming the notch portion can form a groove by minimizing a thermal effect on the exterior material and prevent damage to the exterior material. For example, thermal damage to the exterior material may be prevented. The laser used in the heating operation S30 may heat the exterior material.

In the manufacturing method of the present disclosure, an inserting operation S70 of inserting an electrode assembly may be performed after the notch operation S50 of forming the notch portion. An electrode assembly may be inserted into the body portion 13 through the inserting operation S70 of inserting the electrode assembly.

In the manufacturing method of the present disclosure, a covering operation S90 of covering an opening portion provided in a body portion with a cap portion may be performed after the inserting operation S70 of inserting an electrode assembly. After an electrode assembly is inserted into a body portion 13, cap portion 14 may cover the body portion 13. Through this, the electrode assembly may be stably accommodated inside the exterior material 12.

In the present specification, an operation of forming the notch portion formed as one body with a body portion 13 by performing the heating operation S30 of heating one region of the exterior material and the notch operation S50 of forming the notch portion in one region of the body portion 13 of the exterior material is illustratively described, but alternatively, it is also possible to form a notch formed as one body with cap portion 14 in one region of the cap portion 14 of an exterior material.

Referring to FIG. 12, a manufacturing method of a battery cell of the present disclosure may further include operation S 10 of forming a venting portion by pressurizing at least one of an inner surface of the exterior material and an outer surface of the exterior material. In operation S10 venting portion 30 (see FIG. 9) may be formed on at least one of an inner surface of the exterior material 12 (see FIG. 9) and an outer surface of the exterior material 12. For example, when body portion 13 is manufactured through extrusion, a venting portion may be formed through mechanical cutting or laser etching.

In one embodiment, in the manufacturing method of the present disclosure, operation S 10 of forming a venting portion may be performed before a notch operation S50 of forming a notch portion. After a pressurizing portion pressurizes both surfaces of the exterior material 12 to form recessed venting portion 30, notch portion 20 may be formed by irradiating a laser.

In another embodiment, in the manufacturing method of the present disclosure, operation S10 of forming a venting portion and notch operation S50 of forming a notch portion may be performed simultaneously. While pressurizing the exterior material 12 through a pressurizing portion of which one side is protruding to form a notch, one region of the exterior material 12 may be recessed to form a venting portion 30.

However, depending on an embodiment, operation S 10 of forming a venting portion may be omitted.

The present disclosure may be modified and implemented in various forms, and its scope is not limited to the embodiments described above. Therefore, if a modified embodiment includes components of the present disclosure, it should be regarded as falling within the scope of the rights of the present disclosure.

## Claims

1. A battery cell comprising:
an electrode assembly including a cathode, an anode, and a separator disposed between the cathode and the anode; and
an exterior material accommodating the electrode assembly therein,
wherein the exterior material includes: a first region including a notch portion provided on an outer surface; and a second region surrounding the first region,
wherein the tensile strength of the first region is provided to be lower than the tensile strength of the second region.

2. The battery cell according to claim 1, wherein the notch portion is provided in the form of a groove recessed from an outer surface of the exterior material toward the inside.

3. The battery cell according to claims 1 or 2, wherein the tensile strength of the first region is 80% or less of the tensile strength of the second region.

4. The battery cell according to any one of the preceding claims, wherein the elongation of the first region is provided to be different from the elongation of the second region.

5. The battery cell according to claim 4, wherein the elongation of the first region is greater than the elongation of the second region.

6. The battery cell according to claim 5, wherein the elongation of the first region is 300% or more of the elongation of the second region.

7. The battery cell according to any one of the preceding claims, wherein the exterior material further includes: a body portion accommodating the electrode assembly; and a cap portion including a cell tab, which electrically connects the electrode assembly to the outside, and covering the body portion, wherein the notch portion is provided in the body portion.

8. The battery cell according to any one of the preceding claims, wherein the notch portion is formed as one body with the exterior material.

9. The battery cell according to any one of the preceding claims, wherein the exterior material further includes a venting portion formed by recession of at least one of an inner surface and an outer surface provided in a direction opposite to the inner surface, and the notch portion and the venting portion are positioned to overlap along a recession direction in which the at least one surface is recessed.

10. The battery cell according to any one of the preceding claims, wherein the shape of the notch is changed based on the internal pressure of the exterior material.

11. A manufacturing method of a battery cell, which includes an electrode assembly including a cathode, an anode, and a separator disposed between the cathode and the anode; a body portion accommodating the electrode assembly therein; and a cap portion covering the body portion, comprising:
a heating operation of heating one region of an exterior material; and
a notch operation of forming a notch portion in one region of the heated exterior material.

12. The manufacturing method of a battery cell according to claim 11, wherein in the heating operation, the exterior material is heated by irradiating a first laser and wherein the notch portion is formed by irradiating a second laser having a pulse width different from the pulse width of the first laser.

13. The manufacturing method of a battery cell according to claims 11 or 12, further comprising: a venting portion forming operation of forming a venting portion by pressurizing at least one of an inner surface of the exterior material and an outer surface of the exterior material.

14. A battery cell comprising:
an electrode assembly including a cathode, an anode, and a separator disposed between the cathode and the anode, the separator physically separating the cathode from the anode but allowing the flow of ions; and
an exterior material including at least one region of reduced tensile strength than the remaining exterior material.

15. The battery cell of claim 14, wherein the at least one region of reduced tensile strength forms an indentation within the remaining exterior material.
